# EUROPÄISCHE PATENTSCHRIFT

(11) **EP 1 053 824 B1**
(45) Veröffentlichungstag und Bekanntmachung des Hinweises auf die Patenterteilung: **27.02.2002**
(21) Anmeldenummer: 00108725.3
(22) Anmeldetag: 22.04.2000
(51) Int. Cl.: B23Q 7/06, B65G 25/10, B23D 43/04

(54) **Vorschubvorrichtung**
Feed mechanism
Mécanisme d'avance

(30) Priorität: 10.05.1999 DE 19921520
(43) Veröffentlichungstag der Anmeldung: 22.11.2000
(73) Patentinhaber: Wilfried Strothmann GmbH & Co KG Maschinenbau und Handhabungstechnik, 33758 Schloss Holte-Stukenbrock (DE)
(72) Erfinder: Strothmann, Wilfried, 33758 Schloss Holte-Stukenbrock (DE)
(74) Vertreter: TER MEER STEINMEISTER & PARTNER GbR

(56) Entgegenhaltungen:
- EP-A- 0 196 582
- DE-A- 2 254 528
- DE-A- 3 118 133
- NL-C- 60 079

## Beschreibung

Die Erfindung betrifft eine Vorschubvorrichtung für Fördertische mit einem hin- und hergehend beweglichen Antriebsglied, das beim Vorschub aus der Tischfläche austritt und beim Rückzug in diese eintaucht, wie z.B. aus Dokument DE-A- 3 118 133 bekannt und dem Oberbegriff des Anspruchs 1 entsprechend.

Antriebsglieder, die in der Lage sind, ein Fördergut in einer bestimmten Richtung vorzuschieben und während des Rückhubes unter die Förderfläche abzutauchen, sind in verschiedenen Ausführungsformen bekannt. Förderflächen dieser Art sollen im vorliegenden Zusammenhang als Fördertische bezeichnet werden. Sie können aus Rollen- oder Kugelbahnen, Bandförderern mit in Abstand liegenden Bändern oder auch einfachen Gleitflächen bestehen. Als ein Beispiel, das jedoch den Geltungsbereich der vorliegenden Erfindung nicht einschränken soll, kann ein sogenannter Transferförderer zwischen den Pressenstationen einer Pressenstraße angesehen werden. Hier müssen Blechteile zumeist in eine vorgegebene Position bewegt und in dieser gegen Anschläge ausgerichtet werden.

Die vorliegende Erfindung soll sich auf eine Vorschubvorrichtung beziehen, die beispielsweise das Andrücken einer Blechplatte gegen Anschläge beim Ausrichten vor einer Presse ermöglicht. Allgemeiner ausgedrückt, soll die erfindungsgemäße Vorschubvorrichtung das Andrücken eines grundsätzlich beliebigen Gegenstandes gegen Anschläge beim Ausrichten vor einer Arbeitsstation beliebiger Art ermöglichen.

Der Erfindung liegt die Aufgabe zugrunde, eine Vorschubvorrichtung der genannten Art zu schaffen, die relativ einfach herstellbar ist, eine geringe Massenträgheit aufweist und daher rasch hin- und herbeweglich ist.

Zur Lösung dieser Aufgabe ist die erfindungsgemäße Vorschubvorrichtung dadurch gekennzeichnet, daß das beim Vorschub vorauslaufende, anhebbare Ende der Klinke über einen beidendig schwenkbaren Lenker an einem bei der Vorschubbewegung und der Rückzugsbewegung zurückbleibenden, durch Reibung an einer gestellfesten Fläche gebremsten Reibklotz abgestützt ist.

Die Reibung des Reibklotzes auf der gestellfesten Fläche bewirkt, daß die Klinke bei der Vorschubbewegung über die Tischfläche angehoben und beim Rückzug unter die Tischfläche abgesenkt wird, da der Reibklotz bei der Bewegung der Vorschubvorrichtung in bezug auf das Gestell stets bestrebt ist, zurückzubleiben.

Es wurde im Zusammenhang mit der Aufgabenstellung der Erfindung bereits darauf hingewiesen, daß mit der Erfindung erreicht werden soll, daß die Vorschubvorrichtung eine geringe Massenträgheit aufweist und daher rasch hin-und her beweglich ist. Dieses Ziel wird dadurch erreicht, daß lediglich die schwenkbare Klinke im Zusammenhang mit einem geeigneten Zugorgan hin-und her bewegt werden muß, während der Antrieb für das Zugorgan stationär angeordnet sein kann und das Ausschwenken der Klinke keine von außen zugeführte Energie erfordert, also keinerlei Luftzylinder, Stellmagneten oder dergleichen, die häufig bei bekannten Lösungen vorgesehen sind. Wichtig ist darüber hinaus auch, daß es nicht notwendig ist, bewegliche Energieversorgungsleitungen, also etwa Druckluftleitungen, Stromleitungen etc. mit dem Antriebsglied mitzuführen, da bewegliche Energieversorgungsleitungen an industriellen Anlagen stets störanfällig sind, verschleißen können und den Zugang zu der Anlage erschweren.

Die Reibung des Reibklotzes auf der gestellfesten Fläche bewirkt, daß der Reibklotz beim Vorrücken der Vorschubvorrichtung zurückbleibt und in der Lage ist, die Klinke anzuheben. Geeignete Materialpaarungen stehen in ausreichendem Maße zur Verfügung. An der der gestellfesten Fläche zugewandten Seite kann der Reibklotz auch einen gesonderten Reibbelag aufweisen, und es kann darüber hinaus ein federnd von dem Reibklotz abgespreizter Bremsklotz vorgesehen sein. Es kann auch sinnvoll sein, den Reibklotz aus einem relativ schweren Material herzustellen, das eine hohe Trägheit aufweist und dessen der gestellfesten Flächen zugewandte Oberfläche, sofern der Reibklotz auf dieser aufliegt, fest gegen die gestellfeste Fläche gepreßt wird.

In diesem Zusammenhang ist darauf hinzuweisen, daß die Erfindung nicht auf Anwendungsfälle beschränkt ist, bei denen die Klinke nach oben aus einer Förderfläche aufgerichtet wird. Vielmehr sind die Orientierung der Klinke im Raum und deren Wirkrichtung grundsätzlich beliebig. So kann die Erfindung beispielsweise mit einer nach unten ausfahrbaren Klinke zur Vereinzelung von Platten von einem Plattenstapel eingesetzt werden. Soweit im vorliegenden Zusammenhang Begriffe wie "oben" und "unten" verwendet werden, bezieht sich das auf eine Ausführungsform, bei der die Klinke nach oben angehoben wird. Diese Begriffe werden daher nur zur Vereinfachung der Beschreibung verwendet und sind nicht als zwingende Richtungsangaben für die praktische Anwendung zu verstehen.

Das System zur Steuerung der Bewegung der Klinke arbeitet vollständig wartungs- und pflegefrei, unterliegt nur geringem Verschleiß und arbeitet sehr zuverlässig.

Vorzugsweise ist das Antriebsglied in eine Lücke in einem Trum eines endlosen Zuggliedes eingefügt, beispielsweise eines Zahnriemens. In diesem Falle ist das Zugglied im Bereich des Antriebsgliedes unterbrochen, und die Unterbrechung wird durch ein Verbindungsstück mit zwei seitlich aufragenden Wangen überbrückt, zwischen denen die Klinke schwenkbar gelagert sein kann. Diese Klinke sollte sich in der aufgerichteten Stellung nicht über ihre Schwenkachse, sondern an einer Stützfläche des Verbindungsstückes abstützen, da oft hohe Kräfte auftreten, durch die die Schwenkachse verformt oder beschädigt werden könnte.

Bei einer bevorzugten Ausführungsform ist die Klinke auch an ihrem bei Vorschub zurückliegenden Ende über einen beidendig schwenkbaren, zweiten Lenker mit dem Verbindungsstück verbunden, der kürzer ist als der die Klinke anhebende erste Lenker. Dieser zweite Lenker ermöglicht es, daß sich die Klinke gegen die Stützfläche am Verbindungsstück anlegen kann und somit die Achse der Klinke nicht mit den Vorschubkräften belastet wird.

Zur Stabilisierung und zusätzlichen Führung der Klinke ist vorzugsweise ein dritter, beidendig schwenkbarer Lenker zwischen dem Anlenkpunkt des ersten Lenkers an der Klinke und dem Verbindungsstück angebracht.

Im folgenden werden bevorzugte Ausführungsbeispiele der Erfindung anhand der beigefügten Zeichnung näher erläutert.
- Fig. 1: ist eine schematische Seitenansicht des erfindungsgemäßen Antriebsgliedes in der Ruhestellung oder Rückzugsstellung;
- Fig. 2: entspricht Fig. 1, zeigt jedoch die Vorschubstellung

Es sei noch einmal darauf hingewiesen, daß die beiden Zeichnungen rein schematische Seitenansichten darstellen, in denen zum Teil auch verdeckte Linien gezeigt sind, andere Linien dagegen fortgelassen sind, sofern dies für die Erläuterung zweckmäßig war.

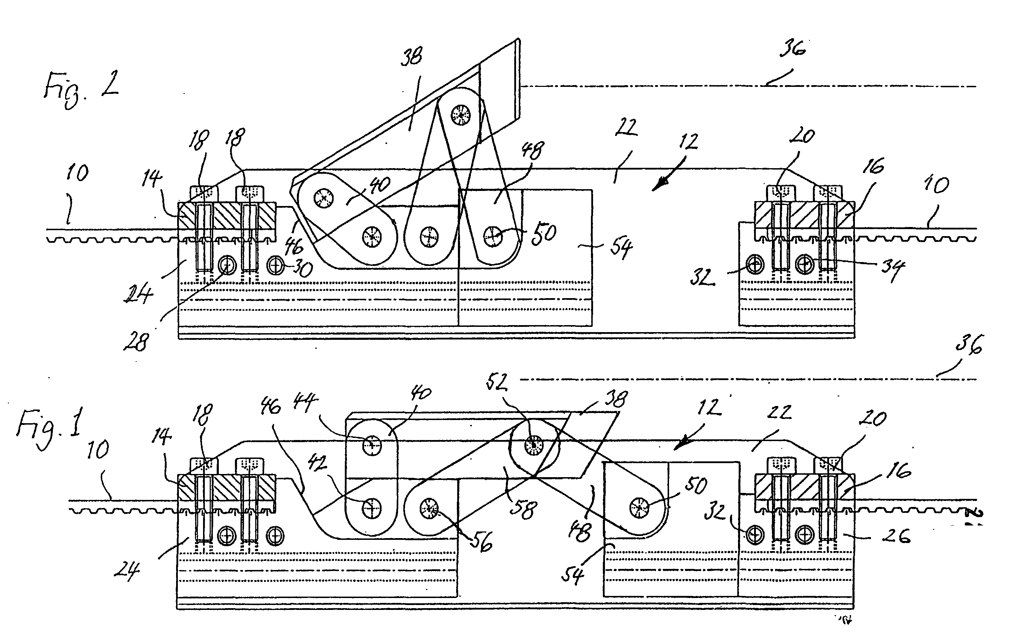

Mit 10 ist in beiden Figuren ein Zahnriemen bezeichnet, der im Bereich der Darstellungen unterbrochen ist. Diese Unterbrechung wird durch ein Verbindungsstück 12 überbrückt, an dem links und rechts in Fig. 1 und 2 die Enden des Zahnriemens 10 mit Hilfe jeweils eines Klemmstücks 14,16 und zweier Klemmschrauben 18,20 befestigt sind. Das Verbindungsstück 12 weist zwei seitliche Wangen 22 auf, die in Fig. 1 und 2 deckungsgleich hintereinander liegen. Das Verbindungsstück 12 kann auch ein geschlossenes U-Profil sein. Zwischen den beiden Wangen 22 befinden sich bei der gezeigten Ausführungsform Verbindungsblöcke 24,26 in den beiden Endbereichen, die mit Hilfe von Schrauben 28,30,32,34, die senkrecht zur Zeichenebene die beiden Wangen 22 verbinden, mit den Wangen zu einer Einheit verbunden sind.

In Fig. 1 und 2 wird mit einer strichpunktierten Linie die Tischfläche oder Förderfläche angedeutet. Die Vorschubrichtung soll von links nach rechts in der Zeichnung gerichtet sein, die Rückzugsrichtung dagegen von rechts nach links. An dem in der Zeichnung links liegenden Verbindungsblock 24 ist nicht nur das Ende des Zahnriemens 10 befestigt, sondern zugleich eine Klinke 38 schwenkbar gelagert, die zwischen einer waagerechten, in Fig. 1 gezeigten Ruhestellung unterhalb der Tischebene und einer teilweise über die Tischebene schräg aufwärts in Vorwärtsrichtung angehobenen Stellung beweglich ist. Diese angehobene Stellung ist in Fig. 2 gezeigt.

Die Klinke 38 kann direkt schwenkbar an dem Verbindungsblock 24 oder auch dem Verbindungsstück 12 angebracht sein oder auch indirekt über einen beidendig schwenkbaren Lenker 40, der mit Hilfe von senkrecht zur Zeichenebene verlaufenden Schwenkachsen 42 und 44 mit dem Verbindungsblock 24 einerseits und der Klinke 44 andererseits verbunden ist. Die Lagerung der schwenkbaren Klinke 38 über den Lenker 40 bietet vor allem die Möglichkeit, daß sich die Klinke 38 in der aufgerichteten Stellung an einer Stützfläche 46 abstützen kann, so daß die Schwenkachsen 42,44 von schweren Lasten, die beim Vorschub auf die Klinke 38 einwirken können, freigehalten werden.

Der zuvor geschilderte, relativ kurze Lenker 40 wird im vorliegenden Zusammenhang auch als zweiter Lenker bezeichnet.

Das anhebbare, in Vorschubrichtung vordere Ende der Klinke 38 ist über einen weiteren Lenker 48, der auch als erster Lenker bezeichnet wird, mit Hilfe von Schwenkachsen 50 und 52 mit einem Reibklotz 54 verbunden, der in Vorschub- und Rückzugsrichtung, also nach rechts und links in Fig. 1 und 2, zwischen den beiden Verbindungsblöcken 24 beweglich ist. Im einzelnen ist der Reibklotz 54 auf einer nicht dargestellten Führungsfläche am ebenfalls nicht dargestellten Gestell des Fördertisches abgestützt.

Der Reibklotz 54 ist beispielsweise auf seiner unteren Oberfläche mit einem Reibbelag versehen, der bewirkt, daß der Reibklotz bei der Bewegung der Vorschubvorrichtung in bezug auf das Gestell die Tendenz hat zurückzubleiben. Es kann auch eine nicht dargestellte, in den Reibklotz eingebettete, federnd von diesem abgespreizte Bremsplatte vorgesehen sein. In Betracht kommt auch ein relativ schwerer Klotz aus Metall, dessen Verschiebung auf der Führungsfläche eine gewisse Reibungskraft entgegensteht. Diese Reibungskraft muß zumindest so groß sein, daß der Reibklotz 54 bei der Verschiebung der in Fig. 1 und 2 gezeigten Teile nach rechts und links zurückbleibt, also in bezug auf das Verbindungsstück 12 nach links gleitet, und bei der Rückzugsbewegung der Teile nach links ebenfalls in bezug auf das Verbindungsstück 12 zurückbleibt, bis der Reibungsklotz gegen den auf der rechten Seite gezeigten Befestigungsblock 26 anliegt. Es ist ersichtlich, daß bei dieser relativ zum Verbindungsstück 12 hin- und hergehenden Bewegung des Reibungsklotzes 54 der Lenker 48 die Klinke bei der Vorschubbewegung über die Förderfläche anhebt, wie es in Fig. 2 gezeigt ist, und bei der entgegengesetzten Bewegung unter die Förderfläche absenkt.

Schließlich ist zur eindeutigen Befestigungsdefinition zwischen der Schwenkachse 52, die den ersten Lenker 48 mit der Klinke 38 verbindet, und einer weiteren Schwenkachse 56 am links in der Zeichnung gezeigten Befestigungsblock 24 ein dritter Lenker 58 vorgesehen. Dieser Lenker 58 hat im wesentlichen die selbe Länge wie der erste Lenker 48. Die beiden längeren Lenker 48 und 58 bilden im wesentlichen ein gleichschenkliges Dreieck, dessen oberer Scheitelpunkt, verkörpert durch die Schwenkachse 52 an der Klinke, durch die beiden Lenker 48,58 sicher abgestützt und geführt wird.

Es wurde bereits darauf hingewiesen, daß es sich bei den Figuren 1 und 2 um rein schematische Darstellungen handelt. So können beispielsweise die Lenker 48,58 paarweise oder mehrfach hintereinander vorgesehen sein. Sofern das Verbindungsstück 12 ein am Boden geschlossenes U-Profil ist, sollte dies am Boden im Bereich der Bewegung des Reibklotzes 54 zumindest ein Fenster aufweisen, über das der Reibklotz 54 eine gestellfeste Führungsfläche erreichen kann.

## Patentansprüche

1. Vorschubvorrichtung für Fördertische mit einem hin- und herbeweglichen Antriebsglied (38), das beim Vorschub aus der Tischfläche (36) austritt und beim Rückzug in diese eintaucht, wobei das Antriebsglied eine aus der Tischfläche in Vorschubrichtung aufrichtbare, schwenkbare Klinke (38) umfaßt, **dadurch gekennzeichnet, daß** das beim Vorschub vorauslaufende, anhebbare Ende der Klinke über einen beidendig schwenkbaren Lenker (48) an einem bei der Vorschubbewegung und der Rückzugsbewegung zurückbleibenden, durch Reibung an einer gestellfesten Fläche abgebremsten Reibklotz (54) abgestützt ist.

2. Vorschubvorrichtung nach Anspruch 1, **dadurch gekennzeichnet, daß** das Antriebsglied (38) in eine Lücke in einem Trum eines endlosen Zuggliedes (10) eingefügt ist.

3. Vorschubvorrichtung nach Anspruch 2, **dadurch gekennzeichnet, daß** das Zugglied ein Zahnriemen (10) ist.

4. Vorschubvorrichtung nach Anspruch 2 oder 3, **dadurch gekennzeichnet, daß** das Zugglied (10) im Bereich des Antriebsgliedes (38) unterbrochen ist und daß die Unterbrechung durch ein Verbindungsstück (12) mit zwei seitlich aufragenden Wangen (22) überbrückt ist.

5. Vorschubvorrichtung nach Anspruch 4, **dadurch gekennzeichnet, daß** die Klinke (38) in der aufgerichteten Stellung an einer Stützfläche (46) des Verbindungsstücks (12) abgestützt ist.

6. Vorschubvorrichtung nach Anspruch 5, **dadurch gekennzeichnet, daß** die Klinke (38) auch an ihrem bei Vorschub zurückliegenden Ende über einen beidendig schwenkbaren zweiten Lenker mit dem Verbindungsstück (12) verbunden ist, der kürzer ist als der die Klinke (38) anhebende erste Lenker (48).

7. Vorschubvorrichtung nach Anspruch 6, **dadurch gekennzeichnet, daß** ein dritter, beidendig schwenkbarer Lenker (58) zwischen dem Anlenkpunkt des ersten Lenkers (48) an der Klinke (38) und dem Verbindungsstück (12) angebracht ist.

8. Vorschubvorrichtung nach einem der vorhergehenden Ansprüche, **dadurch gekennzeichnet, daß** der Reibklotz (54) auf der der gestellfesten Fläche zugewandten Seite einen Reibbelag aufweist.

9. Vorschubvorrichtung nach einem der vorhergehenden Ansprüche, **dadurch gekennzeichnet, daß** der Reibklotz (54) mit einer federnd abgespreizten Bremsplatte ausgerüstet ist.

10. Vorschubvorrichtung nach einem der vorhergehenden Ansprüche, **dadurch gekennzeichnet, daß** der Reibklotz (54) aus Metall oder einem anderen schweren Material ähnlicher Dichte besteht.

## Claims

1. Feed mechanism for conveyor tables having a drive element (38) which can be moved back and forth and which moves out of the table plane (36) during feed movement and which moves into the table plane (36) during return movement, the drive element comprising a pivotable catch (38) which can be raised out of the table plane in the feed direction, **characterised in that** the raisable end of the catch, which end is at the front during feed movement, is supported by means of a connecting rod (48), which is pivotable at both ends, on a friction block (54) which remains behind during the feed movement and the return movement and which is braked by friction on a face fixed to a frame.

2. Feed mechanism according to claim 1, **characterised in that** the drive element (38) is inserted into a gap in a strand of an endless traction member (10).

3. Feed mechanism according to claim 2, **characterised in that** the traction member is a toothed belt (10).

4. Feed mechanism according to claim 2 or 3, **characterised in that** the traction member (10) is interrupted in the region of the drive element (38) and **in that** the interruption is bridged by a connecting piece (12) having two laterally rising side-walls (22).

5. Feed mechanism according to claim 4, **characterised in that** the catch (38) is supported in the raised position on a support face (46) of the connecting piece (12).

6. Feed mechanism according to claim 5, **characterised in that** the catch (38) is also connected, at the end thereof that is at the rear during feed movement, to the connecting piece (12) by means of a second connecting rod which is pivotable at both ends and which is shorter than the first connecting rod (48) which raises the catch (38).

7. Feed mechanism according to claim 6, **characterised in that** a third connecting rod (58) which can be pivoted at both ends is fitted between the articulation point of the first connecting rod (48) on the catch (38) and the connecting piece (12).

8. Feed mechanism according to any one of the preceding claims, **characterised in that** the friction block (54) has a friction lining on the side that faces the face fixed to the frame.

9. Feed mechanism according to any one of the preceding claims, **characterised in that** the friction block (54) is provided with a resiliently braced brake plate.

10. Feed mechanism according to any one of the preceding claims, **characterised in that** the friction block (54) comprises a metal or another heavy material of similar density.

## Revendications

1. Dispositif d'avance pour des tables transporteuses, comprenant un organe d'entraînement à mouvement alternatif (38) qui, lors de l'avance, sort de la surface de la table (36) et, lors du retour, y pénètre, l'organe d'entraînement comprenant un cliquet pivotant (38) qui se relève au-dessus de la surface de la table dans la direction d'avance, **caractérisé en ce que** l'extrémité relevable du cliquet située à l'avant lors de l'avance prend appui, par l'intermédiaire d'un bras (48) pivotant à ses deux extrémités, sur un bloc à friction (54) qui, lors du mouvement d'avance et du mouvement de retour, reste en arrière et est freiné par friction contre une surface solidaire du bâti.

2. Dispositif d'avance selon la revendication 1,
**caractérisé en ce que** l'organe d'entraînement (38) est inséré dans une discontinuité d'un brin d'un organe de traction sans fin (10).

3. Dispositif d'avance selon la revendication 2,
**caractérisé en ce que** l'organe de traction est une courroie dentée (10).

4. Dispositif d'avance selon la revendication 2 ou 3,
**caractérisé en ce que** l'organe de traction (10) est interrompu dans la zone de l'organe d'entraînement (38), et **en ce que** l'interruption est comblée par une pièce de liaison (12) à deux joues rehaussées latéralement (22).

5. Dispositif d'avance selon la revendication 4,
**caractérisé en ce que**, dans la position relevée, le cliquet (38) prend appui sur une surface d'appui (46) de la pièce de liaison (12).

6. Dispositif d'avance selon la revendication 5,
**caractérisé en ce qu'**à son extrémité située à l'arrière lors de l'avance le cliquet (38) est également relié à la pièce de liaison (12) par un second bras pivotant à ses deux extrémités, lequel est plus court que le premier bras (48) soulevant le cliquet (38).

7. Dispositif d'avance selon la revendication 6,
**caractérisé en ce qu'**un troisième bras (58) pivotant à ses deux extrémités est disposé entre le point d'articulation du premier bras (48) sur le cliquet (38) et la pièce de liaison (12).

8. Dispositif d'avance selon une des revendications précédentes, **caractérisé en ce que** le bloc à friction (54) comporte une garniture de friction sur le côté tourné vers la surface solidaire du bâti.

9. Dispositif d'avance selon une des revendications précédentes, **caractérisé en ce que** le bloc à friction (54) est équipé d'une plaque de freinage à assise élastique.

10. Dispositif d'avance selon une des revendications précédentes, **caractérisé en ce que** le bloc à friction (54) est réalisé en métal ou en un autre matériau lourd de densité analogue.
